# EUROPEAN PATENT SPECIFICATION

(11) **EP 3 348 915 B1**
(45) Date of publication and mention of the grant of the patent: **21.08.2019**
(21) Application number: 18151535.4
(22) Date of filing: 12.01.2018
(51) Int. Cl.: F24C 15/32, A21B 3/04

(54) **OVEN FOR COOKING FOODS**
OFEN ZUM KOCHEN VON LEBENSMITTELN
FOUR DE CUISSON POUR ALIMENTS

(30) Priority: 12.01.2017 IT 201700002704
(43) Date of publication of application: 18.07.2018
(73) Proprietor: Tecnoeka S.R.L., 35010 Borgoricco (PD) (IT)
(72) Inventor: GOLFETTO, Cristiano, I-30030 Pianiga (VE) (IT); PAPALE, Davide, I-35132 Padova (PD) (IT); LORA, Cristina, I-35010 Borgoricco (PD) (IT)
(74) Representative: Gallo, Luca

(56) References cited:
- DE-A1-102005 047 455
- DE-U1- 20 320 174
- DE-U1-202008 016 848
- US-A1- 2015 004 296

## Description

### Field of application

The present invention regards an oven for cooking foods according to the preamble of the independent claim.

The present oven is adapted to be advantageously used in a professional setting, in particular in the foodservice, gastronomy, pastry-making and bakery fields, and it is intended be used for cooking foods arranged inside the oven itself.

Therefore, the present invention is inserted in the field of production of ovens of professional type.

### State of the art

Professional-use ovens for cooking foods are known on the market; these conventionally comprise a support structure that at its interior delimits a cooking chamber, within which the foods to be cooked are intended to be arranged.

The support structure is provided on the front with an access opening to the cooking chamber in order to allow the introduction of the foods to be cooked in the cooking chamber itself and to extract such foods from the latter once cooked.

The support structure comprises a lower wall, an upper wall and two lateral walls, which together delimit the aforesaid cooking chamber. The support structure also comprises a bottom wall placed as a rear closure of the cooking chamber.

A door is normally provided which is hinged to the support structure itself and actuatable to close the access opening during the cooking of the foods.

The oven also comprises heating means adapted to heat the air inside the cooking chamber, and a fan (in particular of centrifugal type) arranged inside the cooking chamber and actuatable in order to generate a hot air circulation flow in the cooking chamber itself, in order to uniformly cook the foods.

More in detail, the fan is positioned at the bottom wall of the support structure and is fixed to a horizontal rotation shaft mechanically connected to an electric motor actuatable to rotate the fan itself.

The heating means of the oven for example comprise an electrical heating element with circular shape around the fan in order to heat the air flow generated by the fan itself, as described more in detail hereinbelow.

In particular, the fan comprises a support disc which is provided with a central hub fixed to the rotation shaft, and carries, mounted thereon, a plurality of blades radially arranged around the rotation shaft itself.

In operation, when the fan is rotated, it frontally suctions the air and expels it radially under pressure through the openings between the blades, in a manner such that the air flow intercepts the electrical heating element, absorbing the heat thereof, and is then propagated inside the cooking chamber in order to bring the heat to the foods to be cooked.

In order to cook foods by means of the steam method, professional-use ovens for cooking foods are known on the market, in technical jargon termed combined steam ovens, provided with (in addition to heating means and at least one fan) water vapor production means, in order to increase the humidity inside the cooking chamber of the oven during the steam cooking of the foods.

One example of a professional-use oven for cooking foods provided with the aforesaid water vapor production means is described in the United States patent application US 2016/0069572.

More in detail, the oven described in US 2016/0069572 is provided with a plurality of fans rotatably constrained at the bottom wall of the support structure of the oven and each fan is arranged aligned with the others along a substantially vertical direction.

The water vapor production means comprise a vertical distribution channel, normally a steel tube, frontally positioned inside the cooking chamber with respect to the fans. The water vapor production means also comprise a water supply source (e.g. a pump) hydraulically connected to the distribution channel and susceptible of feeding the latter with a water flow. More in detail, the distribution channel comprises a plurality of discharge openings, each obtained at one of the fans and therefore each opening faces the corresponding fan.

In operation, the water which crosses the distribution channel exits through the discharge openings and is intercepted by the blades of the fans, which determine the atomization thereof following the impact force with the blades.

Nevertheless, the oven for cooking foods of known type briefly described up to now has in practice shown that it does not lack drawbacks.

The main drawback of such oven lies in the fact that the distribution channel of the water vapor production means is costly to design, make and mount inside the cooking chamber, hence considerably increasing production costs of each oven.

Another drawback lies in the fact that in order to disassemble the fans from the bottom wall of the support structure for a periodic maintenance or cleaning thereof, it is also necessary to remove the distribution channel, which requires additional time and increases the maintenance and/or cleaning costs of the oven.

A further drawback lies in the fact that the water directly hits the blades of the fans, on which a limescale layer is formed after several cooking sessions; such limescale decreases the volumetric efficiency of the fan and thus requires being manually removed by an operator. Therefore, the oven of known type is costly to make and requires very frequent maintenance, which is costly and time-consuming to actuate. Known from the patent DE 202008016848 is an oven in which the fan is provided with a central distributor. The latter is intended to receive the water for the steam cooking and is connected to a plurality of radial channels which conduct the water towards the peripheral edge of the blades of the fan, in order to project the water directly on the electrical heating elements placed around the fan itself.

Also known from the patent US 2015/0004296 is an oven in which the hub of the fan is provided with a plurality of radial holes, having axis orthogonal to the rotation axis of the fan, through which the water is projected into the passages between the blades of the fan in a manner such to be projected on the electrical heating elements placed around the fan itself.

The latter ovens of known type, nevertheless, do not allow distributing the nebulized water in a fully uniform manner in the air flow generated by the fan.

### Presentation of the invention

In this situation, the problem underlying the present invention is therefore to overcome the above-described drawbacks by providing an oven for cooking foods which is capable of ensuring a production of water vapor inside the cooking chamber and which is simple and inexpensive to make.

A further object of the present invention is to provide an oven for cooking foods which allows a continuous and precise control of the water sent to the cooking chamber for producing the water vapor.

A further object of the present invention is to provide an oven for cooking foods which does not require long and complex operations for the periodic maintenance and/or cleaning of the fans.

A further object of the present invention is to provide an oven for cooking foods which is simple and quick to use.

A further object of the present invention is to provide an oven for cooking foods which is entirely reliable in operation.

### Brief description of the drawings

The technical characteristics of the finding, according to the proposed objects, can be clearly found in the contents of the below-reported claims and the advantages thereof will be more evident in the detailed description :
- figure 1 shows a front perspective view of the oven for cooking foods, object of the present invention;
- figure 2 shows a front axonometric view of a containment body of the oven for cooking foods according to the present invention;
- figure 3 shows a rear axonometric view of the of the containment body of the oven for cooking foods according to the present invention;
- figure 4 shows a top rear perspective view of the containment body of the oven for cooking foods according to the present invention;
- figure 5 shows a sectional side axonometric view of the containment body of the oven for cooking foods according to the present invention, made along the trace I-I of figure 2;
- figure 6 shows a top front perspective view of a fan of the oven for cooking foods according to the present invention;
- figure 7 shows an exploded perspective view of the fan of the oven for cooking foods according to the present invention;
- figure 8 shows a rear perspective view of the fan of the oven for cooking foods according to the present invention;
- figure 9 shows a sectional view of the fan of the oven for cooking foods of figure 6, made along a plane containing the rotation axis of the fan itself;
- figure 10 shows a front plan view of the fan of the oven for cooking foods of figure 6.

### Detailed description of a preferred embodiment

With reference to the set of drawings, reference number 1 overall indicates an oven for cooking foods in accordance with the present invention.

The cooking oven 1 is intended to be advantageously employed in a professional setting, in particular in the foodservice, baking, gastronomy or pastry-making field, in order to allow the cooking of foods, as better explained hereinbelow.

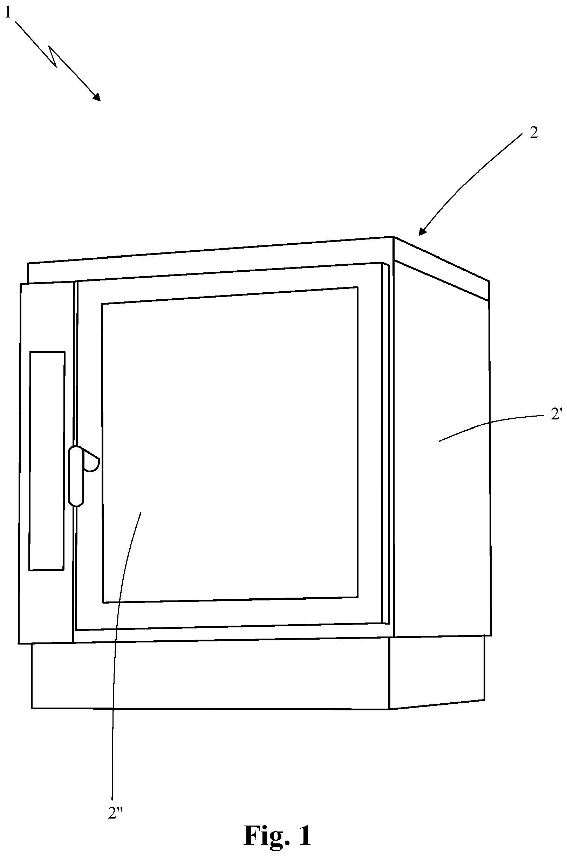

With reference to the embodiment illustrated in figure 1, the oven 1 comprises a support structure 2 preferably provided with an external framework 2' of substantially box-like shape and having an openable front side.

Advantageously, the oven 1 comprises a door 2" which is hinged to the support structure 2 and is movable for opening and closing the front side of the external framework 2'.

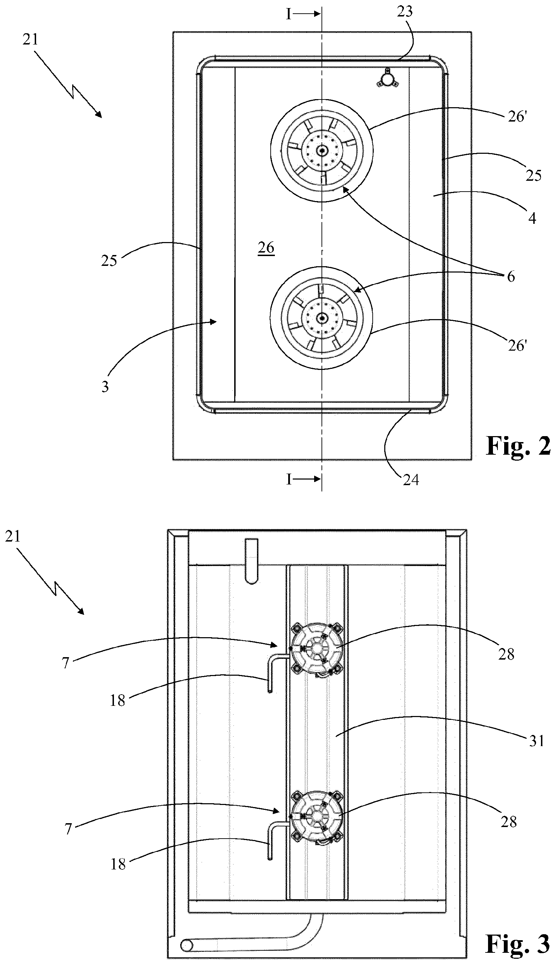

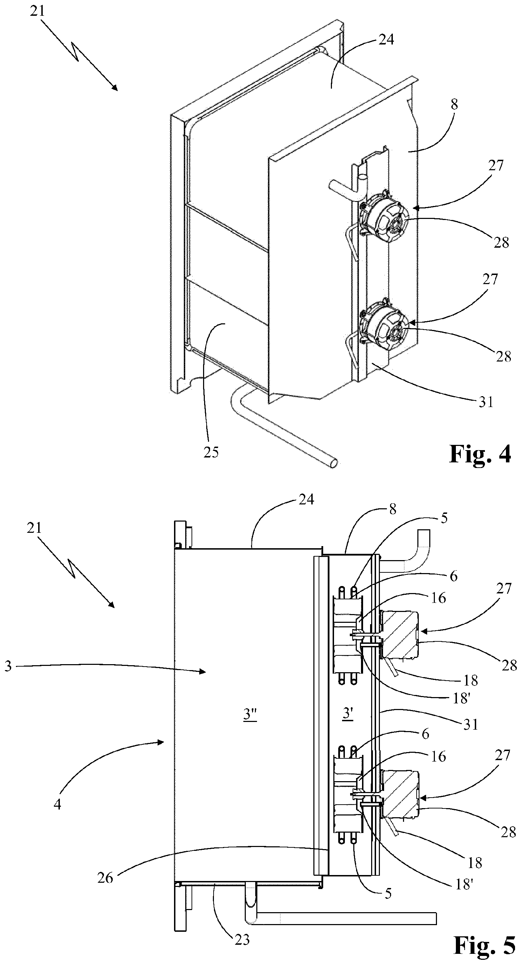

With reference to the embodiments illustrated in figures 2-5, the support structure 2 comprises a containment body 21 (preferably arranged inside the external framework 2') which defines a cooking chamber 3 within which the foods to be cooked are intended to be arranged.

The containment body 21 of the support structure 2 is provided with a supporting wall 8 placed to partially close of the cooking chamber 3.

Preferably, the containment body 21 has substantially box-like shape and comprises a lower wall 23 and an upper wall 24 parallel to each other and facing, and two lateral walls 25 placed to connect the upper 24 and lower 23 walls. Such walls 23, 24 and 25 together delimit the aforesaid cooking chamber 3.

In accordance with the preferred embodiment illustrated in the enclosed figures, the supporting wall 8 of the containment body 21 of the support structure 2 of the oven 1 is placed as a rear closure of the cooking chamber 3 and is preferably fixed to the upper, lower and lateral walls 23-25.

Advantageously, the support structure 2 is provided with an access opening 4 to the cooking chamber 3, and such access opening 4 is preferably positioned opposite the supporting wall 8.

Advantageously, the door 2" of the oven 1 is movable between a closed position, in which it obstructs the access opening 4, and an open position, in which the access opening 4 is unobstructed by the door 2" in order to allow the introduction and the extraction of the foods into/from the cooking chamber 3.

The oven 1 for cooking foods, object of the present invention, also comprises at least one fan 6, preferably of centrifugal type, which is arranged inside the cooking chamber 3 and is actuatable in order to generate at least one recirculation air flow inside the cooking chamber 3 itself, in order to obtain a uniform cooking of the foods inserted at its interior.

More in detail, the fan 6 is arranged at the supporting wall 8 of the containment body 21 and is preferably mounted on such supporting wall 8, in particular adjacent to the latter. The fan 6 is provided with a rotation axis X thereof arranged preferably orthogonal to the supporting wall 8 and around which the fan 6 is actuated to rotate in order to generate the aforesaid air flow in the cooking chamber 3.

In addition, the fan 6 is provided with a rear side 10 intercepted by rotation axis X and directed towards the supporting wall 8, and advantageously with a front side 9 directed in a direction opposite the rear side 10 and in particular towards the access opening 4 of the containment body 21.

The fan 6 also comprises multiple blades 15 positioned around the rotation axis X, in particular radially and equidistant from each other, as described more in detail hereinbelow.

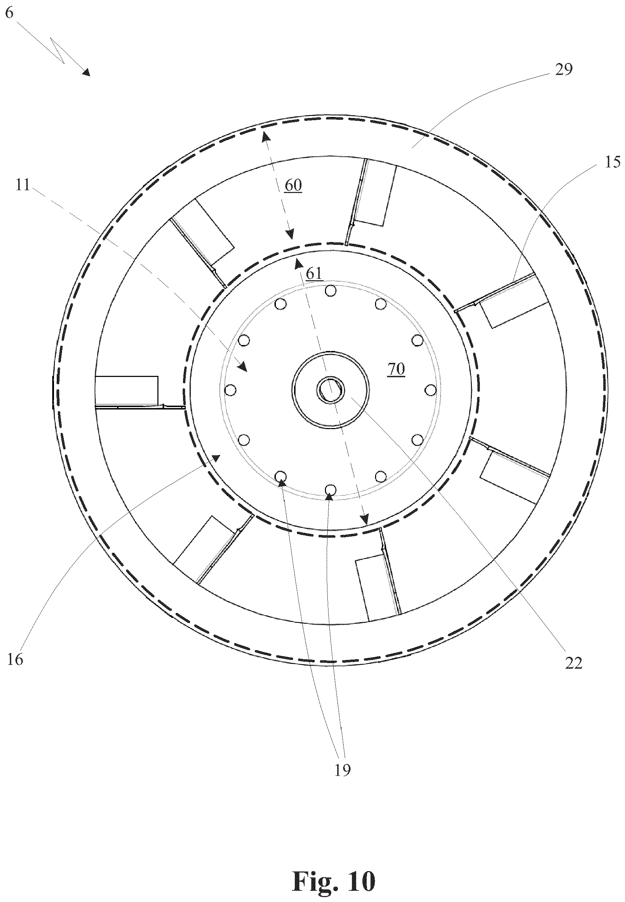

According to the invention, with reference to figure 10, the blades 15 are arranged inside a peripheral region 60, with substantially toroidal shape, with center on the rotation axis X and preferably having the profile of one of the blades 15 as generatrix.

Advantageously, the aforesaid peripheral region 60 is defined as a volume of revolution, obtained by rotating one of the blades 15 around the rotation axis X.

The peripheral region 60 surrounds a central volume 61 of the fan 6 traversed by the rotation axis X.

The blades 15 define a central flow region 11, surrounded by the blades 15, intercepted by the rotation axis X and intended to be crossed by the air suctioned by the fan 6 itself. Advantageously, the flow region 11 is surrounded by the aforesaid peripheral region 60 and is extended in particular into the aforesaid central volume 61 of the fan 6.

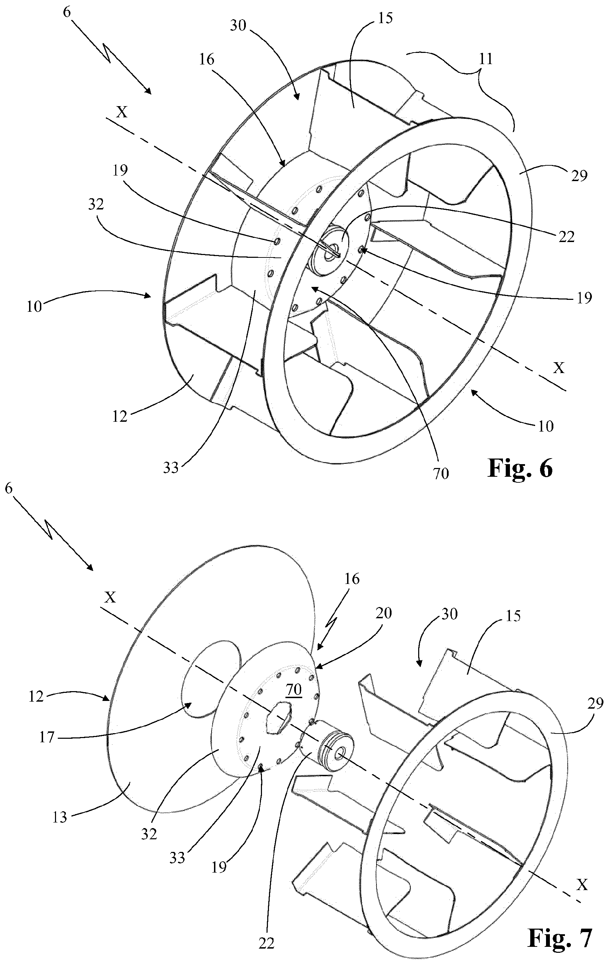

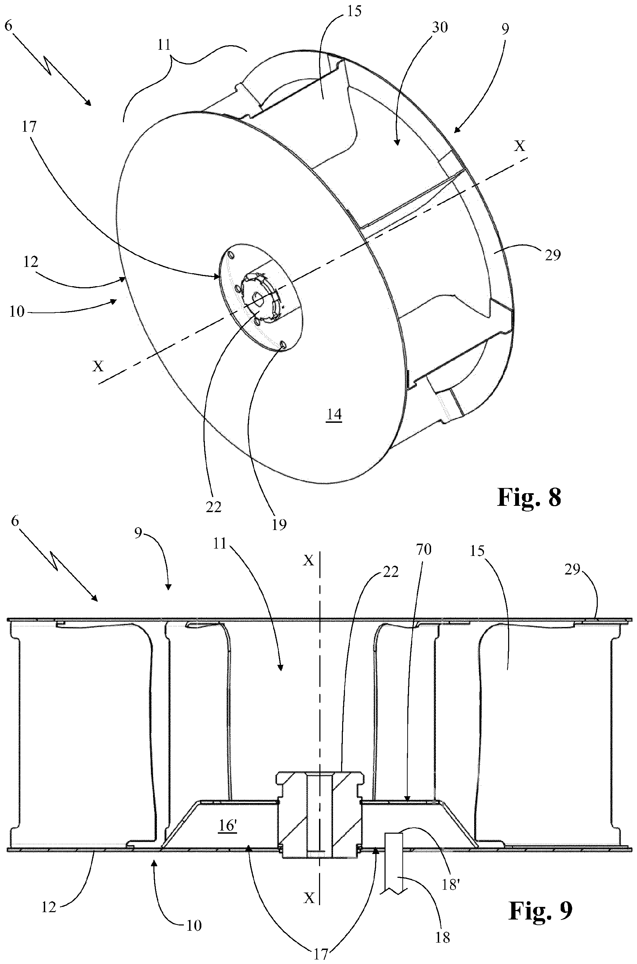

With reference to the embodiments illustrated in figures 6-9, the fan 6 is extended along the rotation axis X between the rear side 10 and the front side 9, between which the aforesaid flow region 11 is extended.

In particular, with the term "flow region" it is intended the volume susceptible of being brought into reduced pressure following the rotation of the fan 6 and intended to be crossed by the suctioned air flow and subsequently conveyed on the delivery line of the fan 6 itself. Preferably, the front side 9 of the fan 6 is at least partially open in order to allow the suction of the air from the cooking chamber 3, so to then radially expel it following the centrifugal force imparted by the blades 15 on the air.

The oven 1 also comprises heating means 5 operatively associated with the cooking chamber 3, preferably mounted on the support structure 2, and actuatable for heating the air inside the cooking chamber 3.

In operation, the recirculation air moved by the fan 6 hits the heating means 5 which are positioned laterally or around the fan 6 and transfer heat to the recirculation air, which is afterward moved to the interior of the cooking chamber 3, uniformly distributing the heat therein.

The oven 1, object of the present invention, also comprises supply means 7, preferably mechanically associated with the support structure 2, and adapted to introduce in the cooking chamber 3 at least one liquid susceptible of being heated by the heat produced by the heating means 5 in order to generate vapor inside the cooking chamber 3 itself, for example in order to carry out a steam cooking of foods, or to increase the humidity during the normal cooking of foods that require it (e.g. desserts).

The rear side 10 of the fan 6 is provided with at least one first through opening 17 in fluid communication with the flow region 11.

The supply means 7 comprise at least one feed duct 18 provided with at least one dispensing mouth 18' arranged at the first through opening 17 of the fan 6 in order to introduce the liquid inside the flow region 11 of the fan 6 itself, in order to convey such liquid on the delivery line to the fan 6 together with the air flow until the liquid is brought in proximity to the heating means 5 such that it is evaporated.

In operation, the liquid delivered by the feed duct 18 is nebulized (or at least split into small drops) by means of the force of the air moved, in particular in turbulent operating conditions, by the fan 6 within the flow region 11. Subsequently, the nebulized liquid remains in suspension in the recirculation air moved by the blades 15 of the fan 6 and is forced together with the recirculation air to at least partially hit the heating means 5, where it vaporizes due to the high temperature.

In this manner, the recirculation air loaded with water vapor - in addition to making the heat uniform for a uniform cooking - also regulates the humidity level inside the cooking chamber 3.

Preferably, the supply means 7 comprise at least one pump, e.g. a rotary pump (not illustrated in the enclosed figures), hydraulically connected to the feed duct 18 and actuatable for conveying the liquid (e.g. water coming from a cistern or from an aqueduct) to the interior of the feed duct 18 itself.

For the purpose of obtaining a constant and accurate regulation of the humidity inside the cooking chamber 3, the oven 1 preferably comprises at least one humidity sensor (not illustrated in the enclosed figures) which is susceptible of sending the measured value to a transducer (e.g. electronic) in order to transform it into a numerical value visible by a user from the outside, e.g. by means of a screen provided at the support structure 2 of the oven 1.

In a manner *per se* known to the man skilled in the art, the user of the oven 1, object of the present invention, can easily vary the desired humidity inside the cooking chamber 3, by means of the variation of the flow rate of liquid delivered by the feed duct 18.

In operation, the user sends an input containing a desired humidity value by means of an interface device (for example a touch-sensitive screen or a numerical keyboard) electrically connected to regulation means (comprising for example a solenoid valve and a pressure regulator placed to connect between the feed duct 18 and the water supply system, in a manner *per se* known to the man skilled in the art) in order to regulate the quantity of liquid conveyed to the feed duct 18.

Advantageously, the fan 6 is axially fixed to a rotation shaft rotatably constrained to the support structure 2 and arranged in particular to cross through the supporting wall 8 with axis orthogonal to the latter and aligned with the rotation axis X.

Preferably, the oven 1 is provided with movement means 27 comprising an electric motor 28, which is mechanically connected to the rotation shaft and is actuatable for rotating the fan 6. In particular, the electric motor 28 is mounted on the supporting wall 8 outside the cooking chamber 3.

In operation, in normal work conditions, the electric motor 28 moves the fan 6 in a rotary motion around the rotation axis X thereof, with an angular speed comprised between 1000 and 3000 revolutions/minute.

Advantageously, the fan 6 comprises a front ring 29, which is arranged on the front side 9 of the fan 6 itself, is extended around the rotation axis X and is fixed to the blades 15. Such front ring 29 acts as a mechanical reinforcement for the entire structure of the fan 6, which is stressed by considerable mechanical stresses during the movement thereof. More in detail, the front ring 29 delimits at its interior a suction opening of the front side 9 of the fan 6, arranged substantially aligned with the rotation axis X, and through such suction opening the air suctioned by the rotating fan 6 passes.

Advantageously, the fan 6 comprises a support wall 12 positioned on the rear side 10 of the fan 6 itself, carrying the blades 15 fixed thereto, and arranged in particular substantially orthogonal to the rotation axis X of the fan 6 itself. Preferably, such support wall 12 is provided with a first face 13 directed towards the flow region 11, and with an opposite second face 14 directed towards the supporting wall 8 of the containment body 21. On the support wall 12, the aforesaid first through opening 17 is obtained, which advantageously is extended around the rotation axis X of the fan 6 and preferably is extended coaxially with respect to the latter, in particular with circular shape.

In accordance with the embodiment illustrated in the enclosed figures, the support wall 12 comprises a substantially flat plate placed to close the rear side 10 of the fan 6 and provided with the aforesaid first through opening 17.

Suitably, the support wall 12, the blades 15 and preferably the front ring 29 of the fan 6 are made of metal material, in particular of stainless steel.

Advantageously, the blades 15 of the fan 6 have substantially plate-like shape and are fixed on the first face 13 of the support wall 12, in particular extended orthogonal to such first face 13.

Preferably, the blades 15 are separated from each other by delivery openings 30 perimetrically made with respect to the fan 6, and through such delivery openings 30 the air is radially insufflated under pressure into the cooking chamber 3.

In operation, when the fan 6 is rotated by the movement means 27, the recirculation air is provided with a lower pressure when it is suctioned at the suction opening delimited by the front ring 29 and is provided with a higher pressure when it is insufflated through the delivery openings 30.

The pressure difference of the recirculation air inside the flow region 11 forces the liquid to follow the movement of the air itself, and in particular the liquid is forced to leave the flow region 11 by crossing the delivery openings 30 without substantially intercepting the blades 15, remaining in suspension.

With reference to the preferred embodiment illustrated in the enclosed figures 6-10, the fan 6 comprises a distribution tank 16, preferably fixed to the support wall 12, and intended to receive the liquid delivered by the corresponding feed duct 18. In particular, such distribution tank 16 is provided with an internal volume 16' thereof which is connected in fluid relationship with the feed duct 18 through the first through opening 17 in order to receive the liquid therein, and is connected in fluid relationship, by means of at least one second through opening 19, with the flow region 11 in order to distribute the liquid into the flow region 11 itself.

More in detail, the distribution tank 16 comprises a front face 70, preferably flat, which faces the flow region 11 and on which the second through opening 19 is obtained for allowing the liquid (within the internal volume 16') to be distributed in the flow region 11 itself.

The front face 70 of the distribution tank 16 is directed in a direction opposite the rear side 10 of the fan 6 and, in particular, towards the front side 9 of the latter.

Preferably, the front face 70 is orthogonal to the rotation axis X of the fan 6 and, in particular, parallel to the support wall 12.

Advantageously, the front face 70 of the distribution tank 16 is intercepted by the rotation axis X, and in particular is extended symmetrically around the latter.

Advantageously, the distribution tank 16 is extended around the rotation axis X of the fan 6 and is preferably provided with multiple second through openings 19 arranged around the rotation axis X itself, in particular in a peripheral zone of the distribution tank 16.

Preferably, in accordance with the preferred embodiment illustrated in the enclosed figures, the second through openings 19 are equidistant from each other and positioned along a circumference substantially centered on the rotation axis X of the fan 6.

In particular, each second through opening 19 has its axis (orthogonal to the opening of the second opening 19) parallel to the rotation axis X of the fan 6.

The distribution tank 16, following the rotation of the fan 6, is adapted to exert a centrifugal force on the liquid contained therein in order to substantially radially distribute the liquid inside the flow region 11 through the second through openings 19. In particular, following the centrifugal force exerted on the liquid, the latter is distributed inside the distribution tank 16 around the rotation axis X and is diffused, through the second through openings 19, inside the flow region 11 with a substantially 360° diffusion angle.

Advantageously, in this manner the liquid is conveyed on the delivery line to the fan 6, being substantially uniformly distributed around the latter, therefore facilitating a uniform distribution of the vapor inside the cooking chamber 3.

Advantageously, the distribution tank 16 comprises a concave containment wall 20, extended in front of the first through opening 17 with the concavity thereof directed towards the latter. The containment wall 20 is provided with the aforesaid front face 70, on which the second through openings 19 are obtained through which the liquid (delivered by the feed duct 18 into the internal volume 16' of the distribution tank 16) is susceptible of being distributed in the flow region 11.

Advantageously, the distribution tank 16 is projectingly extended into the flow region 11, in particular with the aforesaid containment wall 20.

In accordance with the embodiment illustrated in the enclosed figures, the distribution tank 16, and in particular the containment wall 20 of the latter, is fixed to the first face 13 of the support plate 12, e.g. by means of fixing means such as screws, rivets, glue, welding etc.

In accordance with a different embodiment, the distribution tank 16, and in particular the containment wall 20 of the latter is integrally made with the support wall 12. In particular, in accordance with such different embodiment, the support wall comprises a shaped plate, integrally made for example via molding, provided with an annular peripheral portion to which the blades are fixed, and a convex central portion defining the containment wall of the distribution tank. Still in accordance with such different embodiment, the support wall comprises a closure plate fixed (e.g. by means of gluing, welding, screws) to the shaped plate in front of the concavity of the convex portion of the latter and provided with the aforesaid first opening.

Advantageously, the internal volume 16' of the distribution tank 16 is delimited, towards the rear side 10 of the fan 6, by the first face 13 of the supporting wall 12, and towards the front side 9 of the fan 6 (and in particular towards the flow region 11) by the containment wall 20.

Advantageously, the containment wall 20 of the distribution tank 16 closes the rear of the flow region 11, in particular delimiting it with respect to the internal volume 16' of the distribution tank 16 itself.

Preferably, the containment wall 20 of the distribution tank 16 has substantially frustoconical shape and is provided with a circular portion 32 parallel to the support wall 12, placed in front of the first through opening 17. Such circular portion 32 defines (towards the flow region 11) the aforesaid front face 70, on which the second through openings 19 are obtained in order to allow the distribution of the liquid in the flow region 11.

Advantageously, the containment wall 20 is provided with a peripheral portion 33 perimetrically extended around the rotation axis X with respect to the circular portion 32 and extended to connect the latter with the support wall 12.

Advantageously, the dispensing mouth 18' of the feed duct 18 is arranged inside the distribution tank 16 of the corresponding fan 6, with such feed duct 18 arranged to cross through the first through opening 17.

Advantageously, the dispensing mouth 18' of the feed duct 18 is arranged inside the distribution tank 16, in particular through the first through hole 17 for a length comprised between 5 - 70 mm and preferably for a length comprised between 20 - 30 mm.

Advantageously, the feed duct 18, which conveys the liquid to the corresponding fan 6, is mainly extended outside the cooking chamber 3 and in particular is extended behind the supporting wall 12 of the containment body 21.

Advantageously, in order to mechanically connect the rotation shaft to the fan 6, the latter comprises a hub 22 fit on the rotation shaft itself, coaxial with the rotation axis X and fixed to the containment wall 20 of the distribution tank 16, which is in turn fixed to the support wall 12.

In operation, when the fan 6 is rotated by means of the actuation of the movement means 27, the pressure difference inside the flow region 11 forces the air of the cooking chamber 3 to cross through the open front side 9 of the fan 6 itself, and such air is radially expelled through the delivery openings 30 made between the blades 15 at higher pressure.

In order to increase the humidity level inside the cooking chamber 3, the feed duct 18 delivers the liquid through its dispensing mouth 18' and at least partially fills the distribution tank 16.

In operation, following the centrifugal force exerted by the rotating fan 6, the liquid is uniformly distributed along the periphery of the distribution tank 16, in particular at the peripheral portion 33 of the containment wall 20.

Subsequently, the liquid exits from the through openings 19 and intercepts the flow region 11 in a uniform manner, such that the nebulized liquid exiting from each delivery opening 30 (which remains defined between the blades 15) is substantially constant.

In accordance with the preferred embodiment illustrated in the enclosed figures, the oven 1 comprises two fans 6 arranged inside the cooking chamber 3 of the oven 1 with the rear side 10 thereof substantially adjacent and parallel to the supporting wall 8 of the containment body 21 of the support structure 2, and the fans 6 are preferably positioned aligned along a vertical direction parallel to the lateral walls 25 and substantially equidistant with respect to the latter. In particular, in accordance with the embodiment illustrated in the enclosed figures, the fans 6 are arranged with their rear side 10 directed towards the supporting wall 8 of the support structure 2 and with their front side 9 directed towards the access opening 4.

Of course, without departing from the scope of the present patent, the oven 1, object of the present invention, can comprise only one fan 6 positioned with its rear side 10 adjacent to the supporting wall 8 and arranged in particular in a position substantially equidistant to the lower 23, upper 24 and lateral 25 walls. In the same manner, the oven 1 can comprise three or more fans 6 arranged inside the cooking chamber 3, for example fixed on different walls of the containment body 21 of the support structure 2. Advantageously, the oven 1 comprises a dividing separator 26 arranged inside the cooking chamber 3 and positioned in front of the front side 9 of the fan 6, in a manner such to divide the cooking chamber 3 into a ventilation space 3', in which the fan 6 is positioned, and a cooking space 3", in which the foods to be cooked are intended to be arranged.

Advantageously, the dividing separator 26 is arranged substantially orthogonal to the rotation axis X of the fan 6, and is provided with at least one passage opening 26' positioned in front of the front side 9 of the fan 6, in order to allow the latter to suction the air from the cooking space 3" to the ventilation space 3'.

In addition, the dividing separator 26 is provided with two longitudinal flaps which delimit, with the lateral walls 25 of the containment body 21, two corresponding delivery slits through which the air flow, generated on the delivery line by the fan 6, is conveyed from the ventilation space 3' to the cooking space 3".

Advantageously, the support structure 2 comprises a support bracket 31, in particular fixed to the supporting wall 8 of the containment body 21 outside the cooking chamber 3. In particular, such support bracket 31 carries, mounted thereon, the electric motors 28 of the movement means 27.

Advantageously, the heating means 5 of the oven 1 comprise at least one electrical heating element with substantially circular shape and arranged around the fan 6, in a manner so as to intercept the pressurized air exiting from the delivery openings 30 of the fan 6 itself, in order to transfer the heat to the air so to heat it.

In this case, the air moved by the fan 6 hits the electrical heating element of the heating means 5 and the nebulized liquid in suspension quickly evaporates when hitting the heating element itself.

Otherwise, the heating means 5 of the oven 1 can comprise a gas heat source, for example they can comprise a gas burner normally arranged outside the cooking chamber 3, which is in operation coupled with one or more heat exchangers with substantially tubular shape arranged laterally or around the fan 6, within which a high-temperature fluid flows. More in detail, the heat exchangers can for example be arranged parallel to the lateral walls 25 of the containment body 21 of the support structure 2.

In this manner, the recirculation air - carrying the liquid to be vaporized in suspension - passes through the openings that are defined between the heat exchangers, increasing the temperature thereof; the liquid vaporizes and remains in suspension together with the hot air, increasing the humidity level inside the cooking chamber 3.

The invention thus conceived therefore attains the pre-established objects.

## Claims

1. Oven (1) for cooking foods, which comprises:
- a containment body (21) which defines a cooking chamber (3) and is provided with a supporting wall (8) placed to partially close said cooking chamber (3);
- at least one fan (6), which:
- is arranged in said cooking chamber (3) at said supporting wall (8),
- is provided with a rotation axis (X) and with a rear side (10) intercepted by said rotation axis (X) and directed towards said supporting wall (8),
- comprises multiple blades (15) positioned around said rotation axis (X) and defining a central flow region (11), surrounded by said blades (15) and intended to be crossed by the air suctioned by said fan (6);
- heating means (5) operatively associated with said cooking chamber (3) and actuatable for heating the air in said cooking chamber (3);
- supply means (7) operatively associated with said cooking chamber (3) and adapted to introduce, into said cooking chamber (3), at least one liquid susceptible of being heated by said heating means (5) in order to generate vapor inside said cooking chamber (3);
wherein said blades (15) are arranged inside a peripheral region (60), with substantially toroidal shape, with center on said rotation axis (X);
wherein said peripheral region (60) surrounds a central volume (61) of said fan (6) traversed by said rotation axis (X);
wherein said flow region (11) is surrounded by said peripheral region (60) and is extended into the central volume (61) of said fan (6);
wherein the rear side (10) of said at least one fan (6) is provided with a first through opening (17) in fluid communication with said flow region (11);
wherein said supply means (7) comprise at least one feed duct (18) provided with at least one dispensing mouth (18') arranged at said first through opening (17) in order to introduce said liquid inside said flow region (11);
wherein said at least one fan (6) comprises a distribution tank (16), which is connected in fluid relationship with said feed duct (18) through said first through opening (17) in order to receive said liquid inside said distribution tank (16);
said oven (1) being **characterized in that** said distribution tank (16) comprises a front face (70), which is directed in a direction opposite said rear side (10) and faces said flow region (11), and on such front face (70) at least one second through opening (19) is obtained through which said distribution tank (16) is connected in fluid relationship with said flow region (11) in order to distribute said liquid in said flow region (11).

2. Oven (1) for cooking foods according to claim 1, **characterized in that** said front face (70) is orthogonal to said rotation axis (X).

3. Oven (1) for cooking foods according to claim 1 or 2, **characterized in that** said at least one fan (6) comprises a support wall (12) placed on said rear side (10) and carrying said blades (15) fixed thereto, and said first through opening (17) is obtained on such support wall (12).

4. Oven (1) for cooking foods according to according to any one of the preceding claims, **characterized in that** said distribution tank (16) comprises at least one containment wall (20), which is extended in front of said first through opening (17) and is provided with said front face (70) provided with said at least one second through opening (19) through which said liquid is susceptible of being distributed in said flow region (11).

5. Oven (1) for cooking foods according to claims 3 and 4, **characterized in that** said distribution tank (16) is fixed to said support wall (12).

6. Oven (1) according to claim 4 or 5, **characterized in that** said containment wall (20) has concave shape towards said first through opening (17).

7. Oven (1) according to any one of the preceding claims 4 to 6, **characterized in that** the containment wall (20) of said distribution tank (16) has substantially frustoconical shape and is provided with a circular portion (32) which is placed in front of said first through opening (17) and defines, towards said flow region (11), said front face (70) on which said at least one second through opening (19) is obtained.

8. Oven (1) according to any one of the preceding claims 4 to 7, **characterized in that** said containment wall (20) closes said flow region (11) at the rear.

9. Oven (1) according to any one of the preceding claims, **characterized in that** said distribution tank (16) is extended around said rotation axis (X) and is adapted, following the rotation of said fan (6), to exert a centrifugal force on the liquid contained in said distribution tank (16) in order to substantially radially distribute said liquid inside said distribution tank (16).

10. Oven (1) according to any one of the preceding claims, **characterized in that** said distribution tank (16) is provided with multiple said second through openings (19) arranged around said rotation axis (X).

11. Oven (1) according to any one of the preceding claims, **characterized in that** said distribution tank (16) is projectingly extended into said flow region (11).

12. Oven (1) according to any one of the preceding claims, **characterized in that** said dispensing mouth (18') of said at least one feed duct (18) is arranged inside said distribution tank (16).

13. Oven (1) according to any one of the preceding claims, **characterized in that** said at least one feed duct (18) is mainly extended outside said cooking chamber (3).

14. Oven (1) according to any one of the preceding claims, **characterized in that** said at least one second through opening (19) has axis substantially parallel to said rotation axis (X).

## Patentansprüche

1. Ofen (1) zum Kochen von Lebensmitteln, der Folgendes umfasst:
- einen Einschlusskörper (21), der eine Garkammer (3) definiert und mit einer Stützwand (8) ausgestattet ist, die so angeordnet ist, dass sie die genannte Garkammer (3) partiell schließt;
- mindestens ein Gebläse (6), das:
- in der genannten Garkammer (3) an der genannten Stützwand (8) angeordnet ist,
- mit einer Drehachse (X) und einer Rückseite (10), die von der genannten Drehachse (X) geschnitten wird und zu der genannten Stützwand (8) gerichtet ist, ausgestattet ist,
- mehrere um die genannte Drehachse (X) angeordnete Flügel (15) umfasst und einen von den genannten Flügeln (15) umgebenen mittleren Strömungsbereich (11) definiert, der von der über das genannte Gebläse angesaugten Luft (6) überquert werden soll;
- operativ mit der genannten Garkammer (3) verbundene und zum Erwärmen der Luft in der genannten Garkammer (3) einsetzbare Heizelemente (5);
- operativ mit der genannten Garkammer (3) verbundene Versorgungselemente (7), die geeignet sind, mindestens eine zum Erwärmen durch die genannten Heizelemente (5) geeignete Flüssigkeit in die genannte Garkammer (3) einzuleiten, um Dampf im Inneren der genannten Garkammer (3) zu erzeugen;
wobei die genannten Flügel (15) im Inneren eines im wesentlichen ringförmigen Randbereichs (60) mit Mittelpunkt auf der genannten Drehachse (X) angeordnet sind; wobei der genannte Randbereich (60) ein von der genannten Drehachse (X) überquertes mittleres Volumen (61) des genannten Gebläses (6) umgibt;
wobei der genannte Strömungsbereich (11) von dem genannten Randbereich (60) umgeben ist und bis in das mittlere Volumen (61) des genannten Gebläses (6) verläuft; wobei die Rückseite (10) des genannten mindestens einen Gebläses (6) mit einer ersten durchgehenden Öffnung (17) versehen ist, die strömungstechnisch mit dem genannten Strömungsbereich (11) verbunden ist;
wobei die genannten Versorgungselemente (7) mindestens einen mit mindestens einer an der genannten durchgehenden Öffnung (17) zum Einleiten der genannten Flüssigkeit in den genannten Strömungsbereich (11) angeordneten Ausgabemündung (18') ausgestatteten Zuführkanal (18) umfassen;
wobei das genannte mindestens eine Gebläse (6) einen Verteilungstank (16) umfasst, der über die genannte erste durchgehende Öffnung (17) in einer Fluidbeziehung mit dem genannten Zuführkanal (18) steht, um die genannte Flüssigkeit in dem genannten Verteilungstank (16) aufzunehmen;
wobei der genannte Ofen (1) **dadurch gekennzeichnet ist, dass** der genannte Verteilungstank (16) eine in eine zu der genannten Rückseite (10) entgegengesetzte Richtung zeigende, dem genannten Strömungsbereich (11) gegenüberliegende Vorderseite (70) umfasst und auf dieser Vorderseite (70) mindestens eine zweite durchgehende Öffnung (19) erzielt wird, über die der genannte Verteilungstank (16) in einer Fluidbeziehung mit dem genannten Strömungsbereich (11) verbunden ist, um die genannte Flüssigkeit in dem genannten Strömungsbereich (11) zu verteilen.

2. Ofen (1) zum Kochen von Lebensmitteln nach Anspruch 1, **dadurch gekennzeichnet, dass** die genannte Vorderseite (70) rechtwinklig zu der genannten Drehachse (X) ist.

3. Ofen (1) zum Kochen von Lebensmitteln nach Anspruch 1 oder 2, **dadurch gekennzeichnet, dass** das genannte mindestens eine Gebläse (6) eine an der Rückseite (10) platzierte Stützwand (12) umfasst, die die daran befestigten genannten Flügel (15) trägt und die genannte erste durchgehende Öffnung (17) auf dieser Stützwand (12) erzielt wird.

4. Ofen (1) zum Kochen von Lebensmitteln nach einem der vorangegangenen Ansprüche, **dadurch gekennzeichnet, dass** der genannte Verteilungstank (16) mindestens eine Schutzwand (20) umfasst, die vor der genannten ersten durchgehenden Öffnung (17) verläuft und mit der genannten Vorderseite (70) ausgestattet ist, die mit der genannten mindestens einen zweiten durchgehenden Öffnung (19) ausgestattet ist, über die die genannte Flüssigkeit geeignet ist, in dem genannten Strömungsbereich (11) verteilt zu werden.

5. Ofen (1) zum Kochen von Lebensmitteln nach Anspruch 3 oder 4, **dadurch gekennzeichnet, dass** der genannte Verteilungstank (16) an der genannten Stützwand (12) befestigt ist.

6. Ofen (1) nach Anspruch 4 oder 5, **dadurch gekennzeichnet, dass** die genannte Schutzwand (20) zu der genannten ersten durchgehenden Öffnung (17) eine konkave Form aufweist.

7. Ofen (1) nach einem der vorangegangenen Ansprüche 4 bis 6, **dadurch gekennzeichnet, dass** die Schutzwand (20) des genannten Verteilungstanks (16) im Wesentlichen kegelstumpfförmig und mit einem vor der genannten ersten durchgehenden Öffnung (17) positionierten kreisförmigen Abschnitt (32) versehen ist, der in Richtung des genannten Strömungsbereichs (11) die genannte Vorderseite (70) definiert, auf der die genannte mindestens eine zweite durchgehende Öffnung (19) erzielt wird.

8. Ofen (1) nach einem beliebigen der vorangegangenen Ansprüche 4 bis 7, **dadurch gekennzeichnet, dass** die genannte Schutzwand (20) den genannten Strömungsbereich (11) an der Rückseite schließt.

9. Ofen (1) nach einem beliebigen der vorangegangenen Ansprüche, **dadurch gekennzeichnet, dass** der genannte Verteilungstank (16) um die genannte Drehachse (X) herum verläuft und geeignet ist, der Drehung des genannten Gebläses (6) folgend, eine Zentrifugalkraft auf die in dem genannten Verteilungstank (16) enthaltene Flüssigkeit auszuüben, um die genannte Flüssigkeit in dem genannten Verteilungstank (16) im Wesentlichen radial zu verteilen.

10. Ofen (1) nach einem beliebigen der vorangegangenen Ansprüche, **dadurch gekennzeichnet, dass** der genannte Verteilungstank (16) mit zahlreichen genannten zweiten durchgehenden Öffnungen (19) versehen ist, die um die genannte Drehachse (X) herum angeordnet sind.

11. Ofen (1) nach einem beliebigen der vorangegangenen Ansprüche, **dadurch gekennzeichnet, dass** der genannte Verteilungstank (16) vorstehend in den genannten Strömungsbereich (11) ragt.

12. Ofen (1) nach einem beliebigen der vorangegangenen Ansprüche, **dadurch gekennzeichnet, dass** die genannte Ausgabemündung (18') des genannten mindestens einen Zuführkanals (18) im Inneren des genannten Verteilungstanks (16) angeordnet ist.

13. Ofen (1) nach einem beliebigen der vorangegangenen Ansprüche, **dadurch gekennzeichnet, dass** der genannte mindestens eine Zuführkanal (18) hauptsächlich außerhalb der genannten Garkammer (3) verläuft.

14. Ofen (1) nach einem beliebigen der vorangegangenen Ansprüche, **dadurch gekennzeichnet, dass** die genannte mindestens eine zweite durchgehende Öffnung (19) eine im Wesentlichen zu der genannten Drehachse (X) parallele Achse aufweist.

## Revendications

1. Four (1) de cuisson pour aliments comprenant :
- un corps formant réceptacle (21) définissant une chambre de cuisson (3) et muni d'une paroi porteuse (8) placée pour fermer partiellement ladite chambre de cuisson (3) ;
- au moins un ventilateur (6), qui :
- est disposé dans ladite chambre de cuisson (3) sur ladite paroi porteuse (8),
- est muni d'un axe de rotation (X) avec un côté arrière (10) intercepté par ledit axe de rotation (X) et dirigé vers ladite paroi porteuse (8),
- comprend plusieurs pales (15) disposées autour dudit axe de rotation (X) et définissant une zone de flux central (11), entourée desdites pales (15) et destinée à être traversée par l'air aspiré par ledit ventilateur (6) ;
- des moyens de chauffage (5) associés d'une manière opérationnelle à ladite chambre de cuisson (3) et pouvant être actionnés pour chauffer l'air dans ladite chambre de cuisson (3) ;
- des moyens d'alimentation (7) associés d'une manière opérationnelle à ladite chambre de cuisson (3) et aptes à introduire dans ladite chambre de cuisson (3), au moins un liquide susceptible d'être chauffé par lesdits moyens de chauffage (5) pour générer de la vapeur à l'intérieur de ladite chambre de cuisson (3) ;
dans lequel lesdites pales (15) sont disposées à l'intérieur d'une zone périphérique (60), avec une forme sensiblement toroïdale, avec le centre sur ledit axe de rotation (X) ; dans lequel ladite zone périphérique (60) entoure un volume central (61) dudit ventilateur (6) traversé par ledit axe de rotation (X) ;
dans lequel ladite zone de flux (11) est entourée par ladite zone périphérique (60) et s'étend dans le volume central (61) dudit ventilateur (6) ;
dans lequel le côté arrière (10) dudit au moins un ventilateur (6) est muni d'une première ouverture (17) en communication fluide avec ladite zone de flux (11) ;
dans lequel lesdits moyens d'alimentation (7) comprennent au moins un conduit d'alimentation (18) muni d'au moins une bouche de distribution (18') disposée dans ladite première ouverture (17) pour introduire ledit liquide à l'intérieur de ladite zone de flux (11) ;
dans lequel ledit au moins un ventilateur (6) comprend un réservoir de distribution (16) raccordé en relation fluide avec ledit conduit d'alimentation (18) à travers ladite première ouverture (17) afin de recevoir ledit liquide à l'intérieur du réservoir de distribution (16) ;
ledit four (1) étant **caractérisé en ce que** ledit réservoir de distribution (16) comprend une face avant (70), qui est orientée dans un sens opposé audit côté arrière (10) et donne sur ladite zone de flux (11) et sur ladite face avant (70) est réalisée au moins une deuxième ouverture (19) à travers laquelle ledit réservoir de distribution (16) est raccordé en relation fluide avec ladite zone de flux (11) afin de distribuer ledit liquide dans ladite zone de flux (11) ;

2. Four (1) de cuissons pour aliments, selon la revendication 1, **caractérisé en ce que** ladite face avant (70) est orthogonale audit axe de rotation (X).

3. Four (1) de cuissons pour aliments, selon la revendication 1 ou 2, **caractérisé en ce qu'**au moins un ventilateur (6) comprend une paroi porteuse (12) placée sur ledit côté arrière (10) et portant lesdites pales (15) fixées à ce dernier et ladite première ouverture (17) est réalisée dans ladite paroi porteuse (12).

4. Four (1) de cuissons pour aliments, selon l'une quelconque des revendications précédentes, **caractérisé en ce que** ledit réservoir de distribution (16) comprend au moins une paroi de rétention (20) qui s'étend en face de ladite première ouverture (17) et est munie de ladite face avant (70) munie de ladite au moins une deuxième ouverture (19) à travers laquelle ledit liquide est susceptible d'être distribué dans ladite zone de flux (11).

5. Four (1) de cuissons pour aliments, selon les revendications 3 et 4, **caractérisé en ce que** ledit réservoir de distribution (16) est fixé sur ladite paroi porteuse (12).

6. Four (1) selon la revendication 4 ou 5, **caractérisé en ce que** ladite paroi de rétention (20) a une forme concave envers ladite première ouverture (17).

7. Four (1) selon l'une quelconque des revendications précédentes 4 à 6, **caractérisé en ce que** ladite paroi de rétention (20) dudit réservoir de distribution (16) a une forme sensiblement tronconique et est munie d'une partie circulaire (32) disposée en face de ladite première ouverture (17) et définit, vers ladite zone de flux (11) ladite face avant (70) sur laquelle ladite au moins une deuxième ouverture (19) est réalisée.

8. Four (1) selon l'une quelconque des revendications précédentes 4 à 7, **caractérisé en ce que** ladite paroi de rétention (20) ferme à l'arrière ladite zone de flux (11).

9. Four (1) selon l'une quelconque des revendications précédentes, **caractérisé en ce que** ledit réservoir de distribution (16) s'étend autour dudit axe de rotation (X) et est adapté, en suivant la rotation dudit ventilateur (6), à exercer une force centrifuge sur le liquide contenu dans ledit réservoir de distribution (16) pour distribuer essentiellement radialement ledit liquide à l'intérieur dudit réservoir de distribution (16).

10. Four (1) selon l'une quelconque des revendications précédentes, **caractérisé en ce que** ledit réservoir de distribution (16) est muni de plusieurs desdites deuxièmes ouvertures (19) disposées autour dudit axe de rotation (X).

11. Four (1) selon l'une quelconque des revendications précédentes, **caractérisé en ce que** ledit réservoir de distribution (16) s'étend en saillie à l'intérieur de ladite zone de flux (11).

12. Four (1) selon l'une quelconque des revendications précédentes, **caractérisé en ce que** ladite bouche de distribution (18') dudit au moins un conduit d'alimentation (18) est disposée à l'intérieur dudit réservoir de distribution (16).

13. Four (1) selon l'une quelconque des revendications précédentes, **caractérisé en ce qu'**au moins un conduit d'alimentation (18) s'étend principalement à l'extérieur de ladite chambre de cuisson (3).

14. Four (1) selon l'une quelconque des revendications précédentes, **caractérisé en ce que** ladite au moins une des deuxièmes ouvertures (19) a l'axe essentiellement parallèle audit axe de rotation (X).
